# EUROPÄISCHE PATENTSCHRIFT

(11) **EP 2 647 654 B1**
(45) Veröffentlichungstag und Bekanntmachung des Hinweises auf die Patenterteilung: **18.03.2015**
(21) Anmeldenummer: 12163354.9
(22) Anmeldetag: 05.04.2012
(51) Int. Cl.: C08G 18/08, C08G 18/22, C08G 18/32, C08G 18/76, C09D 175/08, C08K 3/00, C08K 3/10, C08K 5/101, C08G 18/48, C09D 175/04, C08K 7/00

(54) **Polyurethan-Polyharnstoff Rostschutz Beschichtung**
Polyurethane polyurea anti-rust coating
Revêtement anti-rouille de polyuréthane-polyurée

(43) Veröffentlichungstag der Anmeldung: 09.10.2013
(73) Patentinhaber: Blum, Holger, 9053 Teufen (CH)
(72) Erfinder: Blum, Holger, 9053 Teufen (CH)
(74) Vertreter: Puschmann Borchert Bardehle Patentanwälte Partnerschaft mbB

(56) Entgegenhaltungen:
- EP-A1- 2 236 531
- WO-A1-2010/057824
- WO-A1-2012/003843

## Beschreibung

Die Erfindung betrifft die Verwendung eines fertig gemischten Polyurethan-Polyharnstoff-Mittels als Rostschutz Beschichtung zum Schutz von Stahloberflächen, ein Verfahren zur Herstellung einer Polyurethan-Polyharnstoff-Rostschutz Beschichtung und die Verwendung des Satzes von Komponenten zu Herstellung einer Hochleistungs-Polyurethan-Polyharnstoff -Rostschutzbeschichtung.

Polyurethan-Polyharnstoff-Beschichtungsmittel weisen gegenüber Polyurethan-Beschichtungsmitteln den Vorteil der besseren Temperaturbeständigkeit, der besseren Haftung auf metallischen und nichtmetallischen Untergründen und der besseren Einbindung von Pigmenten insbesondere von blättchenförmigen Pigmenten auf. Polyurethan-Polyharnstoff-Beschichtungsmittel weisen überdies gegenüber Polyurethan-Beschichtungsmitteln den Vorteil einer besseren mechanischen Widerstandsfähigkeit gegen Abrasion und eine verbesserte Schlagfestigkeit auf.

Ein Polyurethan-Polyharnstoff-Beschichtungsmittel welches Polyurethan-und Polyharnstoff Segmente enthält entsteht durch Reaktion einer Polyhydroxylverbindung der Formel I:

HO-R1-OH Formel I

mit einer Polyisocyanatverbindung der Formel II :

R₂[NCO]_{(2+Z)} mit 0 < Z Formel II

R₂ steht für einen aromatischen, aliphatischen oder alizyklischen Kohlenwasserstoffrest, welcher substituiert sein kann durch Alkyl, Alkoxy oder Halogen.

Die Polyisocyanatverbindung der Formel II reagiert gleichzeitig mit der Feuchtigkeit aus der Luft nach der stöchiometrischen Gleichung I:

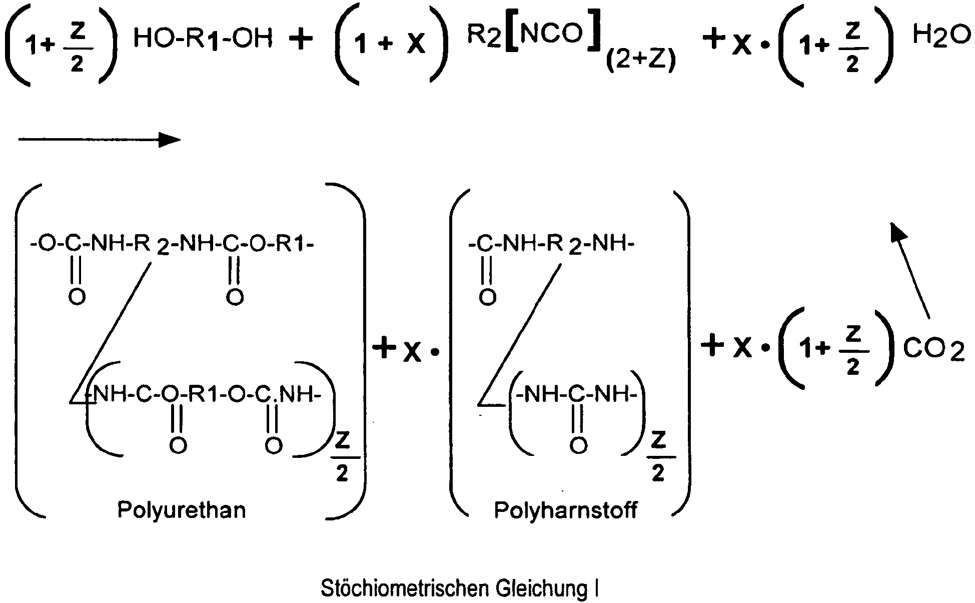

Wie die stöchiometrische Gleichung I zeigt bildet sich dass Polyharnstoff-Segment im Bindemittel der Beschichtung nur dann wenn X > 0 ist d.h. wenn die Polyisocyanatverbinung der Formel II im Überschuss vorhanden ist. Gleichzeitig entsteht bei der Bildung des Polyharnstoff-Segmentes gasförmiges Kohlendioxid CO2 welches aus der Beschichtung in die Umgebungsluft entweicht.

Das austretende Kohlendioxid verursacht Störungen in der Oberfläche bei Aushärten der Beschichtung in Form von Kratern und Blasen, wodurch das Aussehen und die Rostschutzwiderstandsfähigkeit der Polyurethan-Polyharnstoff-Beschichtung gemindert wird.

Es ist möglich die vorgenannten Störungen durch Mitverwendung eines hohen Anteils an flüchtigen Lösungsmitteln zu unterdrücken sofern die verwendeten Pigmente in der Beschichtung kornförmig sind.

Abgesehen von der vermehrten Lösemittelemission versagt die letztgenannte Methode wenn das Pigment in der Polyurethan-Polyharnstoff-Beschichtung überwiegend blättchenförmig ist.

Die vom Standpunkt des Korrosionsschutzes gewünschte Ausformung einer gerichteten Einlagerung der Blättchenpigmente wird durch das Entstehen von Kohlendioxid stark gestört und damit die Vorteile der Blättchenpigmentierung aufgehoben.

WO 2012/003843 offenbart einen Komponentensatz zur Herstellung eines durch chemische Isocyanat-Reaktion härtbaren Polyurethan-Beschichtungsmittels, wenigstens umfassend:
A) eine flüssigen Reaktionskomponente A enthaltend die Polyhydoxylverbindung des Polyurethanbindemittels,
B) einer flüssigen Reaktionskomponente B enthaltend das Polyisocyanat zur Vernetzung der Polyhydroxylverbindung, wobei
   ein anorganisches Füllmittel in der Komponente A und/oder B enthalten ist, und wobei
   die Reaktionskomponenten A und/oder B eine flüchtige Verbindung der Formel II 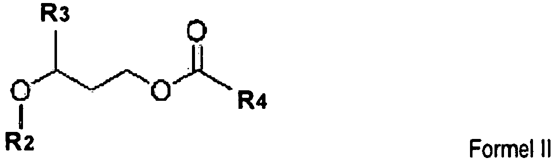
enthält/enthalten, wobei R2, R3, R4 = den -Methyl oder Ethylrest bedeutet, sowie C) als eine separate bereitgestellte Fliessmittel -und Katalysator-Komponente C, die eine Titanverbindung der Formel I Ti(OR)x(OCOR1)y enthält, wobei R= C1 bis C8 Kohlenwasserstoffrest; R1 = C10-C18 Kohlenwasserstoffrest; x= 1 oder 2 ; y= 2 oder 3 ; x + y = 4 ist.

WO 2010/057824 bezieht sich auf eine aushärtbare Zusammensetzung, die die folgenden Komponenten enthält: A) wenigstens ein Isocyanat, B) wenigstens einen Binder und C)
wenigstens einen Metall Oxokomplex, der wenigstens ein Metall enthält, das an wenigstens vier Sauerstoffatome gebunden ist. Ferner wird in der WO 2010/057824 eine Satz von Komponenten angegeben, welcher die vorstehenden Komponenten als separate Komponenten enthält.

EP 2 236 531 betrifft ein Beschichtungsmittel umfassend:
A) 10 bis 90 Gew.-% einer wässrigen, hydroxy- und/oder aminofunktionellen Harzdispersion,
B) 10 bis 90 Gew.-% eines nanopartikelmodifizierten Polyisocyanates und
C) 0 bis 60 Gew.-% weiteren, in der Lacktechnologie bekannten Hilfs- und Zusatzmittel,wobei die Prozentangaben auf Festkörper der Gesamtzusammensetzung bezogen sind.

Es ist Aufgabe der Erfindung, unter Verwendung eines fertig gemischten Polyurethan-Polyharnstoff-Beschichtungsmittels umfassend einen Satz von Komponenten eine Aushärtung des Polyurethan-Polyhamstoff-Beschichtungsmittels ohne Störungen durch Blasen oder Krater in der Oberfläche der Beschichtung auch bei Verwendung von Blättchenpigmenten zu erreichen.

Dazu dient die erfindungsgemäße Verwendung des Polyurethan-Polyharnstoff-Beschichtungsmittels mit dem Satz von Komponenten zu Herstellung eines Polyurethan-Polyharnstoff-Beschichtungsmittels in der in Anspruch 1 angegebenen Weise.

Es wurde gefunden, dass ein lösungsmittelarmes (beispielsweise Lösungsmittelgehalt von kleiner als 20 Volumenprozent), niedrigviskoses (beispielsweise Viskosität von kleiner als 100 milli-Pascal) Bindemittel für ein Polyurethan-Polyharnstoff-Beschichtungsmittels, welches Blättchenpigmente mit hohem Volumen (beispielsweise Volumenkonzentration größer als 25 Volumenprozent) enthält und welches ohne Störungen durch Blasen oder Krater in der Oberfläche der Beschichtung aushärtet, umfasst:
Ein erfindungsgemäß verwendeter Satz von Komponenten zu Herstellung eines Polyurethan-Polyharnstoff-Beschichtungsmittels, das ein lösungsmittelarmes, niedrigviskoses Bindemittel sowie einem anorganischen Füller mit hohem Volumen enthält, umfasst:
   A) eine flüssige Reaktionskomponente A enthaltend die Polyhydroxylverbindung des Polyurethanbindemittelanteils sowie den anorganischen Füller;
   B) eine flüssige Reaktionskomponente B enthaltend Polyisocyanat zur Vernetzung der Polyhydroxylverbindung sowie zur Ausbildung des Polyhamstoffbindemittelanteils;
   C) ein flüssiges Antikrater- und Antiblasen-Additiv als Komponente C enthaltend eine Titanverbindung der Formel III

      Ti(OR3)w(OCOR4)y Formel III

      wobei R3= C1-C8; R4 = C10-C18 Kohlenwasserstoffrest; w= 1 oder 2; y= 2 oder 3 ;
      w + y = 4 ist; sowie als von der Komponente C separate dritte Komponente,
   D) eine flüchtige Verbindung der Formel IV 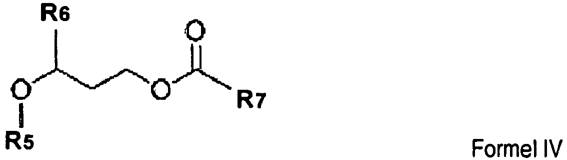
   wobei R5 , R6, R7 = Methyl oder Ethylrest bedeutet. Diese flüchtige Verbindung erhöht die Wirkung der Antikrater- und Antiblasenkomponente C synergistisch und wobei
   durch die beim Mischen der Komponenten aus der Titanverbindung der Formel III und der flüchtigen Verbindung der Formal IV entstehende Chelat-Sechsring-Verbindung bei überschüssigen Isocyanatgruppen, d.h. X>0, bei hoher Luftfeuchtigkeit von 80 bis 85% die Reaktionsgeschwindigkeit zwischen überschüssigen Isocyanatgruppen und der Luftfeuchtigkeit unter Vermeidung von Blasen- und Kraterbildung reduziert wird.

In vorteilhafter Weise ist der anorganische Füller in der Polyurethan-Polyharnstoff-Beschichtung ein blättchenförmiges Pigment. Beschichtungen mit ausschließlich blättchenförmigen Pigmenten weisen einen erhöhten Widerstand gegen mechanische Beanspruchung auf und bewirken einen erhöhten Korrosionsschutz des beschichteten Substrats (z.B. bei Metalloberflächen).

Die flüchtige Verbindung der Formel IV ist Vorteilhafterweise Bestandteil der Komponente A und/oder der Komponente B, so dass vor dem Auftragen des Beschichtungsmittels nur die drei Komponenten A und B und C miteinander vermischt werden müssen.

Die flüchtige Verbindung der Formel IV darf nicht Bestandteil der Komponente C sein da eine solche Mischung, wie gefunden wurde, nicht lagerstabil ist und die Titanverbindung der Formel III durch die flüchtige Verbindung der Formel IV zersetzt wird, was sich durch Ausfällung schwerlöslicher Titanverbindungen bemerkbar macht.

Die Komponente A kann weiterhin Additive und Lösungsmittel enthalten wie sie in der Lackindustrie gebräuchlich sind.

Die Komponente A des Beschichtungsmittels enthält blättchen- und lamellenförmige Pigmente aus Metallen wie z.B. Aluminium oder Zink oder Nickel oder Edelstahl. Die blättchenförmigen Pigmente können auch nichtmetallisch sein und beispielsweise aus Glas oder Aluminiumoxid oder aus Graphit bestehen wodurch eine erhöhte chemische Beständigkeit der Beschichtung erreicht wird.

In besonders vorteilhafter Ausgestaltung der Erfindung besteht die Polyhydroxylverbinding der Komponente A aus dem Reaktionsprodukt von Bisphenol A der Strukturformel I 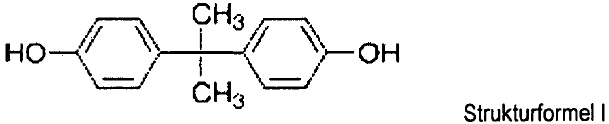 mit Propylenoxid als einem niedermolekularen Diol der Formel I mit vorwiegend sekundären Hydroxylgruppen. Durch Anwesenheit vorwiegend sekundärer Hydroxylgruppen wird die Topfzeit der Beschichtung verlängert.

In besonders vorteilhafter Ausgestaltung der Erfindung weist die Polyisocyanatverbinding der Fomel II der Reaktionskomponente B die Struktur gemäß der nachstehenden Strukturformel II auf 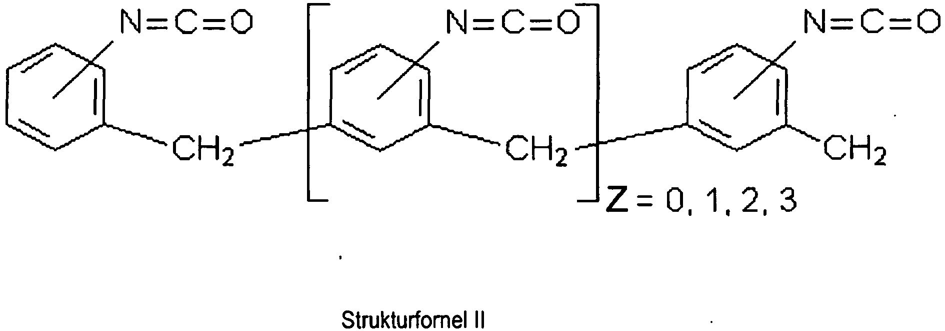 wobei im Mittel der Wert Z = 0,3 bis 2 ist.

Diese flüssige Substanz ist bekannt als technisches polymeres Diphenylmethandiisocyanat. (PMDI) und hat die CAS Nummer 9016-87-9. Diese Art polymerer Isocyanate bewirken eine Durchhärtung und Vernetzung der Beschichtung auch bei niedrigen Temperaturen bei der Anwendung.

In besonders vorteilhafter Ausgestaltung der Erfindung weist die Titanverbindung der Formel I ; Ti(OR)w(OCOR1)y die Struktur gemäß Strukturformel III auf:

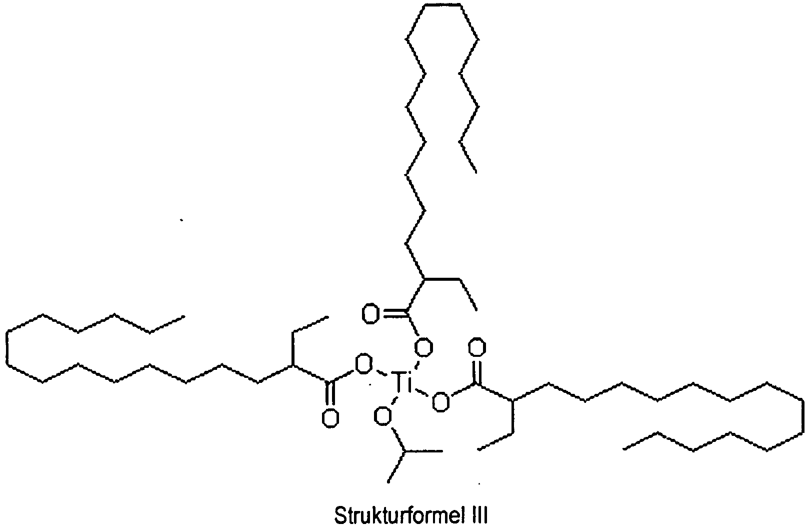

Dies entspricht der chemischen Bezeichnung Tris(Isooctadecanoato-O-)(propan-2-olato) Titan und der CAS Nummer 61417-49-0. Diese Art Titanverbindung weist eine hohe Antikrater-und Antiblasenwirksamkeit auf in dem erfindungsgemäß verwendeten Polyurethan-Polyharnstoff-Beschichtungsmittel, was vordem nicht bekannt war.

Die Komponente C weist Vorteilhafterweise 1-10 Volumenprozent der Titan-Verbindung der Formel III gelöst in einem flüchtigen Kohlenwasserstoff auf. Weiter bevorzugt ist es, dass der flüchtige Kohlenwasserstoff 7- 10 Kohlenstoffatome hat.

In besonders vorteilhafter Ausgestaltung der Erfindung weist die flüchtige Verbindung der Formel II die Struktur gemäß Strukturformel IV auf:

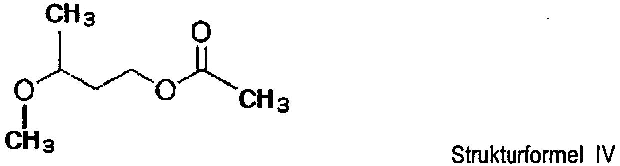

Dies entspricht der chemischen Bezeichnung 3-Methoxy-1-butylacetat und der CAS Nummer 4435-53-4. Diese Verbindung ist unter den genannten flüchtigen Verbindungen die flüchtigste bzw. weist eine sehr gute Flüchtigkeit auf.

Schließlich ist es bei der erfindungsgemäßen Verwendung des Beschichtungsmittels als Rostschutzmittel verteilhaft wenn das Rostschutzmittel auf der Stahlplatte bei 22/23 °C und 80/85 % Luftfeuchtigkeit 7 Tage lang ausgehärtet wird.

### Die Erfindung wird nun an Hand der nachstehenden Beispiele erläutert

### BEISPIELE 1 bis 7

Reaktionskomponente A: 70 Gewichtsteile Bisphenol A Propylenoxid-Diol mit einer OH Zahl von 285 werden in 25 Gewichtsteilen Lösungsmittel gemäß nachstehender Tabelle 1 gelöst. In diese Lösung, welche freie Hydroxylgruppen enthält, werden nach Zugabe von 1 Gewichtsteil Entschäumer, beispielsweise Methylsilicon-Entschäumer, und 0,3 Gewichtsteilen Antioxidans, beispielsweise ein phenolisches Antioxidans, 85 Gewichtsteile fein gemahlene, blättchenförmige Zinkpaste, in der die Teilchengröße der Blättchen beispielsweise kleiner als 50 µm ist, und 41 Gewichtsteile fein gemahlene, blättchenförmige Aluminiumpaste, in der die Teilchengröße der Blättchen beispielsweise kleiner als 50 µm ist, unter Rühren suspendiert.

Reaktionskomponente B: 80 Gewichtsteile polymeres Diphenylmethandiisocyanat der Strukturformel II mit einem Gehalt an reaktionsfähigen Isocyanatgruppen von 31 Gewichtsprozent und einem Z-Wert von 0,7 werden mit 20 Gewichtsteilen Lösungsmittel gemäß nachstehender Tabelle 1 vermischt.

Flüssige Komponente C: Es wurden1 Mol Isopropyltitanat, CAS Nummer 546-68-9, mit 3 Mol Isostearinsäure, CAS Nummer 30399-84-9, drei Tage lang bei 60 °C unter einer Stickstoffatmosphäre gerührt.

Das flüssige, dunkelrote, homogene Reaktionsprodukt der Formel I, mit w=1 und y=3 wurde bei 60 °C unter Vakuum und Durchleiten von Stickstoff weitgehend vom freigesetzten Isopropylalkohol befreit und lieferte 1 Mol technisch reines Tris- (Isooctadecanoato-O-)(propan-2-olato)Titan mit der CAS Nummer 61417-49-0.

Zur Herstellung einer flüssigen Komponente C wurden 1 Volumenteil dieser Titan-IV-Verbindung mit 99 Volumenteilen Limonen, CAS Nummer 5989-27-5, vermischt

Zum Gebrauch wurden 20 Gewichtsteile Reaktionskomponente A unmittelbar vor der Anwendung mit 1 Gewichtsteil flüssiger Komponente C gründlich gemischt. Zu dieser Vormischung werden anschließend soviel Gewichtsteile Reaktionskomponente B unter Rühren zugegeben, dass die fertig angesetzte Beschichtungsmasse 1,7 Mol Isocyanatgruppen pro Mol freie Hydroxylgruppe enthält Dies entspricht einem X-Wert in der stöchiometrischen Gleichung I von X= 0,7.

Das fertig gemischte Beschichtungsmittel wurde sodann mittels Rolle auf eine horizontal eben gelagerte Stahlplatte aufgetragen und bei 22/23 °C und 80/85 % Luftfeuchtigkeit 7- Tage lang ausgehärtet und anschliessend die Oberfläche der Polyurethan-Polyharnstoff-Beschichtung visuell auf das Auftreten von Oberflächenstörungen hin untersucht.

**TABELLE 1**

| Beispiel Nr. | Lösemittel zu Teil A | Lösemittel zu Teil B | Aussehen nach Aushärtung | Bemerkung |
|---|---|---|---|---|
| 1 | Ethylbenzol | Ethylbenzol | Krater | |
| 2 | Ethylbenzol | Ethylacetat | Krater, viele Blasen | |
| 3 | Ethylbenzol | Methoxypropylacetat | Blasen | |
| 4 | Ethylbenzol | Methoxybutylacetat | blank , glatt | erfindungsgemäß |
| 5 | Ethylacetat | Ethylbenzol | Krater+Blasen | |
| 6 | Methoxypropylacetat | Ethylbenzol | Krater | |
| 7 | Methoxybutylacetat | Ethylbenzol | blank , glatt | erfindungsgemäß |

| | | | | |
|---|---|---|---|---|
| CAS Nummern der verwendeten Lösungsmittel : Ethylbenzol CAS 100-41-4 Ethylacetat CAS 141-78-6 Methoxypropylacetat CAS 108-65-6 Methoxybutylacetat CAS 4435-53-4 | | | | |

Das Methoxybutylacetat mit der CAS 4435-53-4 entspricht der Formel IV mit R5, R6, R7 = Methyl.

Von den 7 Kombinationen (Tabelle 1) dieser Zusammenmischungsweise wiesen die Kombinationen 4 und 7 keine Oberflächenstörungen auf, und der Rest der Kombinationen zeigt starke Oberflächenstörungen in Form von Kratern und/oder Blasen auf.

### BEISPIELE 8 bis 14

Reaktionskomponente A: 70 Gewichtsteile Bisphenol A Propylenoxid-Diol mit einer OH Zahl von 285 werden in 25 Gewichtsteilen Lösungsmittel gemäß vorstehender Tabelle 1 gelöst. In diese Lösung, welche freie Hydroxylgruppen enthält, werden nach Zugabe von 1 Gewichtsteil Entschäumer und 0,3 Gewichtsteilen Antioxidants 85 Gewichtsteile fein gemahlene, blättchenförmige Zinkpaste und 41 Gewichtsteile fein gemahlene, blättchenförmige Aluminiumpaste unter Rühren suspendiert Anschließend wurden je 20 Gewichtsteile Reaktionskomponente A mit 1 Gewichtsteil der in Beispiel 1-7 beschriebenen flüssigen Komponente C gründlich gemischt.

Reaktionskomponente B: 80 Gewichtsteile polymeres Diphenylmethandiisocyanat der Strukturformel II mit einem Gehalt an reaktionsfähigen Isocyanatgruppen von 31 Gewichtsprozent und einem Z-Wert von 0,7 werden mit 20 Gewichtsteilen Lösungsmittel gemäß vorstehender Tabelle 1 vermischt.

Die Vormischung aus Reaktionskomponente A und aus Komponente C wurde drei Tage gelagert. Sodann wurden soviel Gewichtsteile der Reaktionskomponente B unter Rühren zugegeben, dass die fertig angesetzte Beschichtungsmasse 1,7 Mol Isocyanatgruppen pro Mol freie Hydroxylgruppe enthält. Dies entspricht einem X-Wert in der stöchiometrischen Gleichung I von X= 0,7.

Das fertig gemischte Beschichtungsmittel wurde sodann mittels Rolle auf eine horizontal eben gelagerte Stahlplatte aufgetragen und bei 22/23 °C und 80/85 % Luftfeuchtigkeit 7- Tage lang ausgehärtet und anschliessend die Oberfläche der Polyurethan-Polyharnstoff-Beschichtung visuell auf das Auftreten von Oberflächenstörungen hin untersucht.

Von den 7 Kombinationen (Tabelle 1) dieser Zusammenmischungsweise wiesen die Kombinationen 4 und 7 keine Oberflächenstörungen auf, und der Rest der Kombinationen zeigt starke Oberflächenstörungen in Form von Kratern und/oder Blasen auf. Daraus folgt, dass nur die Verarbeitungsweise der separaten Zugabe der Komponente C zur Reaktionskomponente A unmittelbar vor Zumischen der Reaktionskomponente B zu dem gewünschten Ziel einer störungsfreien Oberfläche der Polyurethan-Polyharnstoff-Beschichtung führt.

### BEISPIEL 15 Herstellung einer Hochleistungs Rostschutzbeschichtung

Reaktionskomponente A: 70 Gewichtsteile Bisphenol A Propylenoxid-Diol mit einer OH Zahl von 285 werden in 26 Gewichtsteilen C8-Carbonsäureestergemisch (Siedepunkt ca-149 Grad Celsius) gelöst. In diese Lösung, welche freie Hydroxylgruppen enthält, werden nach Zugabe von 1,4 Gewichtsteil Entschäumer und 0,35 Gewichtsteilen Antioxidans 85 Gewichtsteile fein gemahlene(beispielsweise feiner als 50 µm), blättchenförmige Zinkpaste und 41 Gewichtsteile fein gemahlene (beispielsweise feiner als 50 µm), blättchenförmige Aluminiumpaste unter Rühren suspendiert.

Reaktionskomponente B: 80 Gewichtsteile polymeres Diphenylmethandiisocyanat der Strukturformel II mit einem Gehalt an reaktionsfähigen Isocyanatgruppen von 31 Gewichtsprozent und einem Z-Wert von 0,7 werden mit 20 Gewichtsteilen Methoxybutylacetat vermischt.

Flüssige Komponente C: Zur Herstellung einer flüssigen Komponente C wurden 1 Volumenteil technisch reines Tris- (Isooctadecanoato-O-)(propan-2-olato)Titan mit der CAS Nummer 61417-49-0 mit 99 Volumenteilen Toluol vermischt.

Zum Gebrauch wurden 20 Gewichtsteile Reaktionskomponente A unmittelbar vor der Anwendung mit 1 Gewichtsteil flüssiger Komponente C gründlich gemischt. Zu dieser Vormischung wurden anschließend soviel Gewichtsteile Reaktionskomponente B unter Rühren zugegeben, dass die fertig angesetzte Beschichtungsmasse 1,61 Mol Isocyanatgruppen pro Mol freie Hydroxylgruppe enthält. Dies entspricht einem X-Wert in der stöchiometrischen Gleichung I von X= 0,61.

Das fertig gemischte Beschichtungsmittel wurde sodann mittels einer Spiralrakel auf Prüfbleche aufgetragen: Stahl matt, Größe 100x150x0.5 mm, entfettet, und mit ca. 1µm Schichtdicke silanisiert.

Die so mit dem Polyurethan-Polyharnstoff Rostschutz Primer beschichteten Probebleche wurden 7 Tage bei Raumtemperatur gealtert und dann einer Kondenswasser-Konstantklimaprüfung sowie einer neutralen Salznebelsprühprüfung unterzogen.

### a) 500 Stunden Kondenswasser-Konstantklimaprüfung nach DIN EN ISO 6270-1:2002-02

Probe 1
Schichtdicke : 58 µm
Blasengrad nach DIN EN ISO 4628-2:2003 : 0 (SO)
Gitterschnittprüfung (Gt) nach DIN EN ISO 2409:2007-08 :Gt 0

Probe 2
Schichtdicke : 56 µm
Blasengrad nach DIN EN ISO 4628-2:2003 : 0 (SO)
Gitterschnittprüfung (Gt) nach DIN EN ISO 2409:2007-08 :Gt 0

### b) 500 Stunden neutrale Salzsprühnebelprüfung nach DIN EN ISO 9227:2005-09

Probe 1
Schichtdicke : 61 µm
Blasengrad nach DIN EN ISO 4628-2:2003 : 0 (SO)
Gitterschnittprüfung (Gt) nach DIN EN ISO 2409:2007-08 :Gt 0
Rostgrad (Ri) nach DIN EN ISO 4628-3:2003 : Ri 0

### Probe 2

Schichtdicke : 61 µm
Blasengrad nach DIN EN ISO 4628-2:2003 : 0 (SO)
Gitterschnittprüfung (Gt) nach DIN EN ISO 2409:2007-08 :Gt 0
Rostgrad (Ri) nach DIN EN ISO 4628-3:2003: Ri 0

## Patentansprüche

1. Verwendung eines fertig gemischten Polyurethan-Polyharnstoff-Beschichtungsmittels umfassend einen Satz von Komponenten zu Herstellung eines Beschichtungsmittels, das ein lösungsmittelarmes, d.h. Lösungsmittelgehalt von kleiner als 20 Volumenprozent, niedrigviskoses, d.h. Viskosität kleiner als 100 milli-Pascal, Bindemittel sowie einem anorganischen Füller mit hohem Volumen, d.h. Volumenkonzentration größer als 25 Volumenprozent, enthält, als Rostschutzmittel durch Auftragen des Rostschutzmittels auf eine Stahlplatte oder ein Stahlbauteil vorzugsweise mittels Rolle oder Spiralrakel,
wobei der Satz von Komponenten umfasst:
A) eine flüssige Reaktionskomponente A enthaltend die Polyhydroxylverbindung des Polyurethanbindemittelanteils sowie den anorganischen Füller;
B) eine flüssige Reaktionskomponente B enthaltend Polyisocyanat zur Vernetzung der Polyhydroxylverbindung sowie zur Ausbildung des Polyhamstoffbindemittelanteils;
C) eine flüssige Komponente C enthaltend eine Titanverbindung der Formel III
i. Ti(OR3)w(OCOR4)y Formel III
wobei R3= C1-C8; R4 = C10-C18 Kohlenwasserstoffrest; w= 1 oder 2 ; y= 2 oder 3 ;
w + y = 4 ist; sowie als von der Komponente C separate Komponente,
D) eine flüchtige Verbindung der Formel IV
ii. 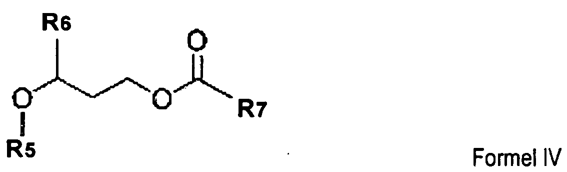
wobei R5 , R6, R7 = Methyl oder Ethylrest bedeutet
und wobei
durch die beim Mischen der Komponenten aus der Titanverbindung der Formel III und der flüchtigen Verbindung der Formal IV entstehende Chelat-Sechsring-Verbindung bei überschüssigen Isocyanatgruppen und bei hoher Luftfeuchtigkeit von 80 bis 85% die Reaktionsgeschwindigkeit zwischen überschüssigen Isocyanatgruppen und der Luftfeuchtigkeit unter Vermeidung von Blasen- und Kraterbildung reduziert wird.

2. Verwendung eines Polyurethan-Polyharnstoff-Beschichtungsmittels nach Anspruch 1, **dadurch gekennzeichnet, dass** der anorganische Füller in der Reaktionskomponente A ein blättchenförmiges Pigment ist.

3. Verwendung eines Polyurethan-Polyharnstoff-Beschichtungsmittels nach Anspruch 2, **dadurch gekennzeichnet, dass** die flüchtige Verbindung der Formel IV Bestandteil der Reaktionskomponente A und/oder der Reaktionskomponente B ist.

4. Verwendung eines Polyurethan-Polyharnstoff-Beschichtungsmittels nach Anspruch 1, **dadurch gekennzeichnet, dass** die Reaktionskomponente A weiterhin Additive und Lösungsmittel enthält.

5. Verwendung eines Polyurethan-Polyharnstoff-Beschichtungsmittels nach Anspruch 2, **dadurch gekennzeichnet, dass** die blättchenförmigen Pigmente aus Metallen, vorzugsweise aus Aluminium, Zink, Nickel oder Edelstahl, bestehen.

6. Verwendung eines Polyurethan-Polyharnstoff-Beschichtungsmittels nach Anspruch 2, **dadurch gekennzeichnet, dass** die blättchenförmigen Pigmente aus die blättchenförmigen Pigmente aus nichtmetallischen Stoffen, vorzugsweise aus Glas, Aluminiumoxid, Graphit bestehen.

7. Verwendung eines Polyurethan-Polyharnstoff-Beschichtungsmittels nach Anspruch 1, **dadurch gekennzeichnet, dass** die Polyhydroxylverbinding der Reaktionskomponente A aus dem Reaktionsprodukt von Bisphenol A der Strukturformel I
i. 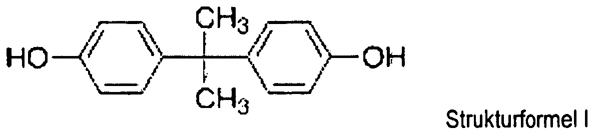 mit Propylenoxid der Formel I mit vorwiegend sekundären Hydroxylgruppen besteht.

8. Verwendung eines Polyurethan-Polyharnstoff-Beschichtungsmittels nach Anspruch 1, **dadurch gekennzeichnet, dass** die Polyisocyanatverbinding der Formel II der Reaktionskomponente B die Struktur gemäß der nachstehenden Strukturformel II aufweist 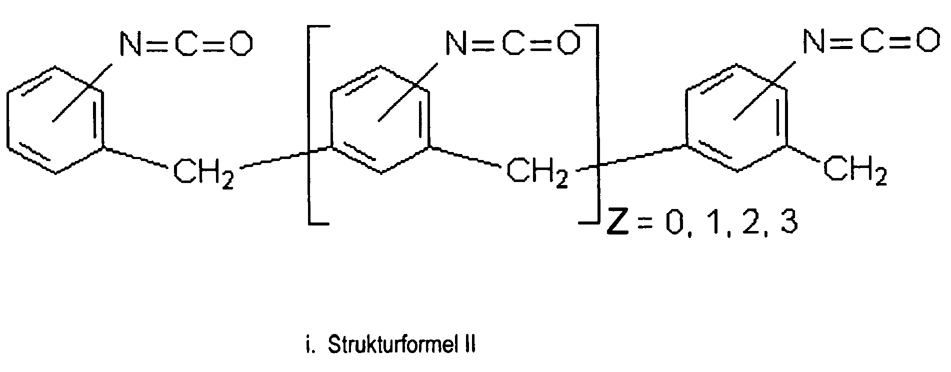 wobei im Mittel der Wert Z = 0,3 bis 2 ist.

9. Verwendung eines Polyurethan-Polyharnstoff-Beschichtungsmittels nach Anspruch 1, **dadurch gekennzeichnet, dass** die Titanverbindung Ti(OR)w(OCOR1)y der Formel I die Struktur gemäß Strukturformel III aufweist:

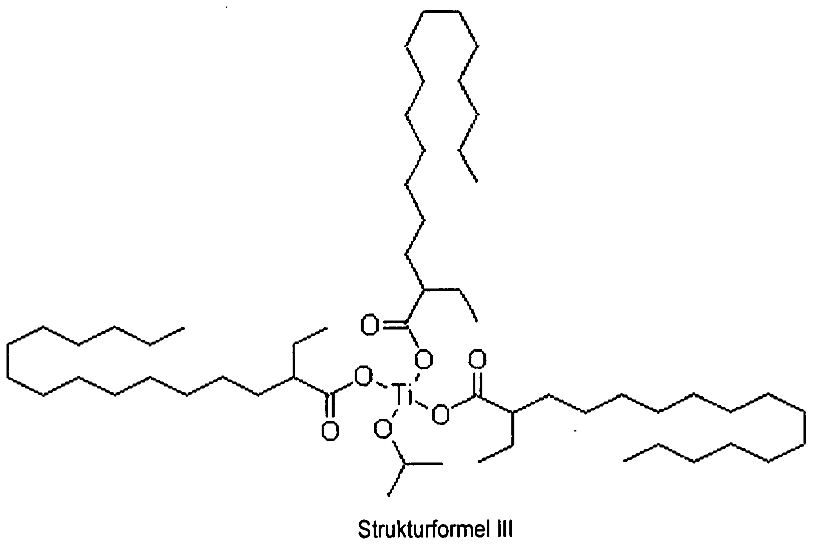

10. Verwendung eines Polyurethan-Polyharnstoff-Beschichtungsmittels nach Anspruch 1, **dadurch gekennzeichnet, dass** die Komponente C 1-10 Volumenprozent der Titan-Verbindung der Formel III gelöst in einem flüchtigen Kohlenwasserstoff aufweist, wobei der flüchtige Kohlenwasserstoff vorzugsweise 7- 10 Kohlenstoffatome hat.

11. Verwendung eines Polyurethan-Polyharnstoff-Beschichtungsmittels nach Anspruch 1, **dadurch gekennzeichnet, dass** die flüchtige Verbindung der Formel II die Struktur gemäß Strukturformel IV aufweist:
1.

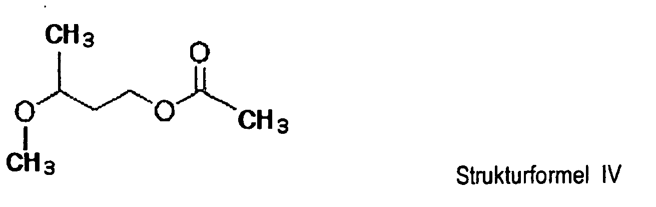

12. Verwendung eines Polyurethan-Polyharnstoff-Beschichtungsmittels nach Anspruch 1, **dadurch gekennzeichnet, dass** das Rostschutzmittel auf der Stahlplatte bei 22/23 °C und 80/85 % Luftfeuchtigkeit 7 Tage lang ausgehärtet wird.

## Claims

1. Use of a ready mixed polyurethane-polyurea coating agent comprising a set of components for producing a coating agent which contains a binding agent being poor in solving agents, i.e. solving agent content of lower than 20 percent by volume, low viscous, i.e. viscosity smaller than 100 millipascal, as well as an anorganic filler with a high volume i.e. a volume concentration larger than 25 percent by volume, as an anti-rust agent by applying the anti-rust agent to a steel plate or a steel construction part, preferably by means of a role or spiral doctor blade, wherein the set of components comprises:
A) A liquid reaction component A containing the polyhydroxyl compound of the polyurethane binder agent portion as well as an anorganic filler;
B) A liquid reaction component B containing polyisocyanate for cross-linking the polyhydroxyl compound as well as for forming the polyurea binder agent portion;
C) A liquid component C containing a compound of titanium of the formula III
i.
Ti(or3)w(OCOR4)y formula III
wherein R3= C1-C8; R4 = C10-C18 hydrocarbon rest; w= 1 or 2 ; y= 2 or 3 ; w + y = 4; as well as a component separate from the component C,
D) A volatile compound of the formula IV 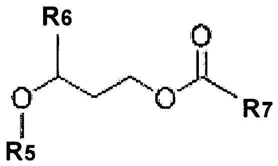
wherein R5, R6, R7= methyl or ethyl rest,
and wherein,
The chelate six-component-ring compound generated during mixing of the component out of the titanium component of the formula III and the volatile compound of the formula IV with excess isocyanat groups and at high air humidity of 80 to 85%, the reaction velocity between the excessive isocyanat groups and the air humidity is reduced while avoiding the formation of blisters and craters.

2. Use of the polyurethane-polyurea coating agent according to claim 1, **characterized in that** the anorganic filler in the reaction component A is a flaky pigment.

3. Use of the polyurethane-polyurea coating agent according to claim 2, **characterized in that** the volatile compound of the formula IV is part of the reaction component A and/or the reaction component B.

4. Use of the polyurethane-polyurea coating agent according to claim 1, **characterized in that** the reaction component A containes, furthermore, an additive and solving agent.

5. Use of the polyurethane-polyurea coating agent according to claim 2, **characterized in that** the flaky pigments consist out of metals, preferably out of aluminum, zinc, nickel or stainless steel.

6. Use of the polyurethane-polyurea coating agent according to claim 2, **characterized in that** the flaky pigments consist out of nonmetallic materials, preferably glass, aluminumoxide, graphite.

7. Use of the polyurethane-polyurea coating agent according to claim 1, **characterized in that** the polyhydroxyl compound of the reaction component A consists out of the reaction product of bisphenol A of the structural formula I 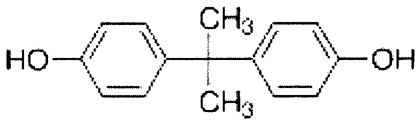 with propyleneoxide of the formula I with predominantly secondary hydroxyl groups.

8. Use of the polyurethane-polyurea coating agent according to claim 1, **characterized in that** the polyisocyanate compound of the formula II of the reaction component B comprises the structure of the structural formula II below 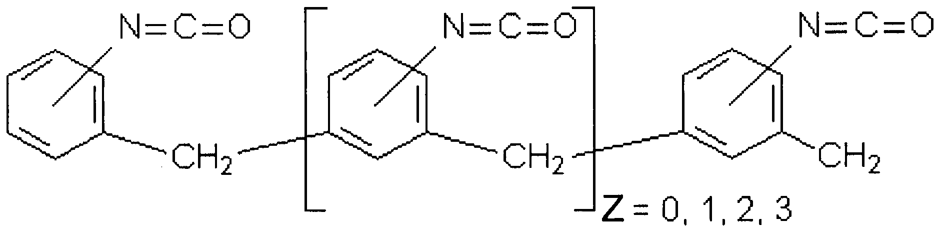 wherein the value Z=0,3 to 2 in average.

9. Use of the polyurethane-polyurea coating agent according to claim 1, **characterized in that** the titan compound Ti(OR)w(OCOR1)y of the formula I comprises the structure according to the structure formula III:

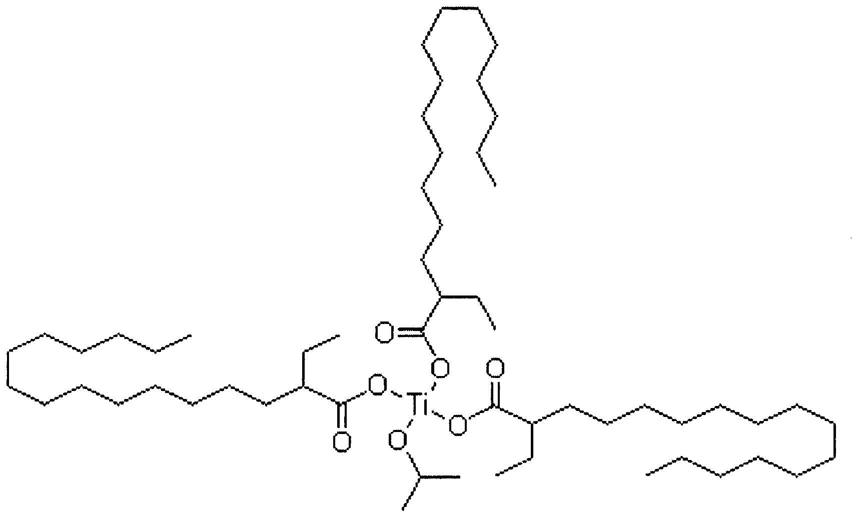

10. Use of the polyurethane-polyurea coating agent according to claim 1, **characterized in that**, the component C comprises 1-10 percent by volume of the titanium compound of the formula III solved in a liquid hydrocarbon wherein the volatile hydrocarbon as preferably 7-10 carbon atoms.

11. Use of the polyurethane-polyurea coating agent according to claim 1, **characterized in that**, the volatile compound of the formula II comprises the structure according to structural formula IV:

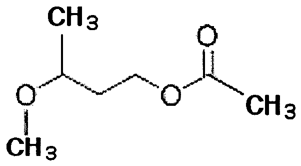

12. Use of the polyurethane-polyurea coating agent according to claim 1, **characterized in that** the anti-rust-agent is hardened on top of the steel plate at 22/23°C and an air humidity of 80/85 % during seven days.

## Revendications

1. Utilisation d'un revêtement antirouille de polyurétane-polyurée complètement mélangé comprenant un ensemble de composants pour la production d'un revêtement contenant un liant faible en solvant, c.-à-d. avec une teneur en solvant de moins de 20 % en volume, peu visqueux, c.-à-d. avec une viscosité de moins de 100 millipascals, ainsi qu'un matériel de comblement anorganique avec un volume élevé, c.-à-d. une concentration volumique de plus de 25 % en volume, en tant qu'agent antirouille par l'application du revêtement antirouille sur une plaque ou une pièce d'acier, idéalement à l'aide d'un rouleau ou d'une racle spiralée, l'ensemble de composants comprenant :
A) un composant réactif liquide A contenant le composé polyhydroxylé de la proportion de liant polyuréthane ainsi que le matériel de comblement anorganique ;
B) un composant réactif liquide B contenant du polyisocyanate pour la réticulation du composé polyhydroxylé ainsi que la formation de la proportion de liant polycarbamide ;
C) un composant liquide C contenant un composé de titane de la formule III
i.
**Ti(OR3)w(OCOR4)y** formule III
où R3 = C1-C8; R4 = C10-C18 Résidu hydrocarboné ; w = 1 ou 2 ; y = 2 ou 3 ; w + y = 4 ; ainsi que du composant séparé du composant C,
D) un composé volatile de la formule IV
ii. 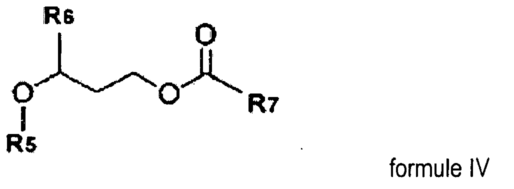 où R5, R6, R7 = méthyle ou résidu d'éthyle,
et où
la vitesse de réaction entre les groupes isocyanates excédentaires et l'humidité de l'air est réduite en prévenant la formation de bulles ou de cratères par le composé chélaté à 6 maillons obtenu en mélangeant les composants du composé de titane de la formule III et le composé volatil de la formule IV en présence de groupes isocyanates excédentaires et d'une humidité atmosphérique de 80 à 85 %.

2. Utilisation d'un revêtement antirouille de polyurétane-polyurée selon la revendication 1, **caractérisé en ce que** le matériel de remplissage anorganique dans le composant réactif A est un pigment lamellaire.

3. Utilisation d'un revêtement antirouille de polyurétane-polyurée selon la revendication 2, **caractérisé en ce que** le composé de la formule IV fait partie intégrante du composé réactif A ou B.

4. Utilisation d'un revêtement antirouille de polyurétane-polyurée selon la revendication 1, **caractérisé en ce que** le composé réactif A contient par ailleurs des additifs et solvants.

5. Utilisation d'un revêtement antirouille de polyurétane-polyurée selon la revendication 2, **caractérisé en ce que** les pigments lamellaires sont composés de métaux, idéalement d'aluminium, zinc, nickel ou acier inoxydable.

6. Utilisation d'un revêtement antirouille de polyurétane-polyurée selon la revendication 2, **caractérisé en ce que** les pigments lamellaires sont composés de substances non métalliques, idéalement de verre, d'oxyde d'aluminium ou de graphite.

7. Utilisation d'un revêtement antirouille de polyurétane-polyurée selon la revendication 1, **caractérisée en ce que** le composé polyhydroxylé du composant réactif A est composé du produit réactif de bisphénol A de la formule structurelle I
i. 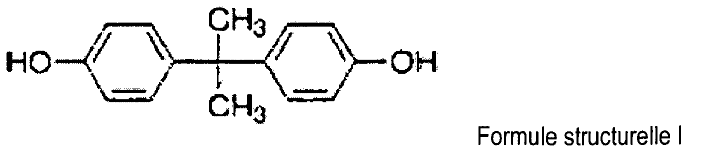 avec de l'oxyde de propylène de la formule I avec des groupes hydroxylés essentiellement secondaires.

8. Utilisation d'un revêtement antirouille de polyurétane-polyurée selon la revendication 1, **caractérisée en ce que** le composé polyisocyanate de la formule II du composant réactif B présente une structure conforme à la formule structurelle II suivante 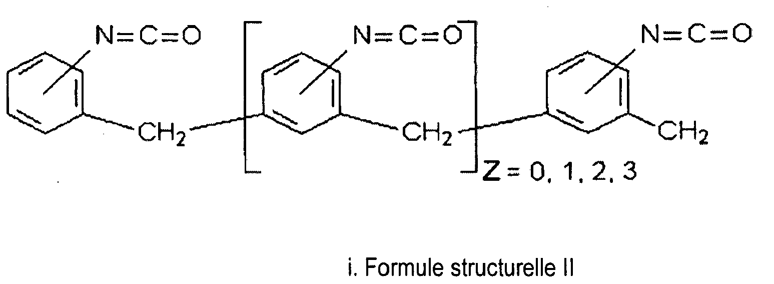 où la valeur moyenne de Z = 0,3 à 2.

9. Utilisation d'un revêtement antirouille de polyurétane-polyurée selon la revendication 1, **caractérisée en ce que** le composé de titane Ti(OR)w(OCOR1)y de la formule I présente une structure conforme à la formule structurelle III:

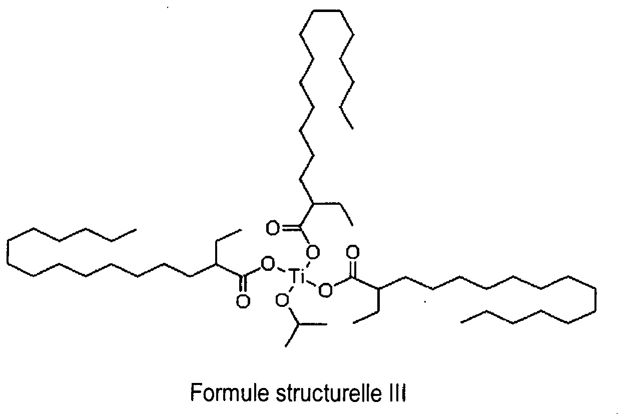

10. Utilisation d'un revêtement antirouille de polyurétane-polyurée selon la revendication 1, **caractérisée en ce que** les composants C présentent 1 à 10 % en volume de la formule III dissoute dans un hydrocarbure volatil, l'hydrocarbure volatile ayant idéalement 7 à 10 atomes de carbone.

11. Utilisation d'un revêtement antirouille de polyurétane-polyurée selon la revendication 1, **caractérisée en ce que** le composé volatil de la formule II présente une structure conforme à la formule structurelle IV :
1.

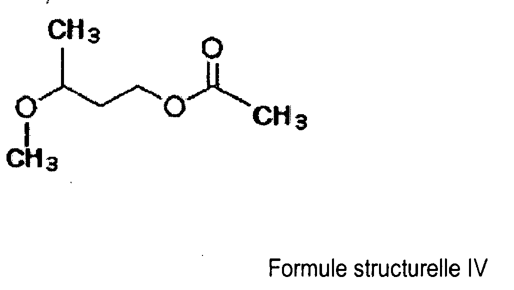

12. Utilisation d'un revêtement antirouille de polyurétane-polyurée selon la revendication 1, **caractérisée en ce que** l'agent antirouille est durci sur la plaque d'acier à 22/23 °C et à 80/85 % d'humidité atmosphérique pendant 7 jours.
